# EUROPEAN PATENT APPLICATION

(11) **EP 4 477 860 A1**
(43) Date of publication of application: **18.12.2024**
(21) Application number: 24182417.6
(22) Date of filing: 14.06.2024
(51) Int. Cl.: F02C 6/08, F02C 7/14, F02C 7/18, F02C 7/224, F02C 7/12, F02C 3/22

(54) **SYSTEM AND METHOD FOR TURBINE ENGINE TURBINE COMPONENT COOLING**

(30) Priority: 16.06.2023 US 202318211100
(71) Applicant: PRATT & WHITNEY CANADA CORP., Longueuil, Québec J4G 1A1 (CA)
(72) Inventor: SMITH, Scott, (01BE5) Longueuil, J4G 1A1 (CA); STRATTON, Russell, (01BE5) Longueuil, J4G 1A1 (CA)
(74) Representative: Dehns

(57) **Abstract**

An aircraft propulsion system (18) and method is provided. The system (18) includes compressor, combustor, and turbine sections (80, 84, 22), a fuel source (64), a heat exchanger (66), a compressor bleed air passage (86), and a cooling air passage (88). The fuel source (64) is configured to contain a non-hydrocarbon fuel. The heat exchanger (66) has separate air and fuel passages (68). The air passage (68) permits passage of the compressed air therethrough. The fuel passage (74) is configured to permit a passage of the non-hydrocarbon fuel therethrough. The compressor bleed air passage (86) is configured to receive compressed air bleed off a core flow path (82) upstream of the combustor section (84). The compressor bleed air passage (86) is in fluid communication with the air passage air inlet (70). The cooling air passage (88) is configured to receive compressed air exiting the air passage (68) air outlet (72) and configured to direct the compressed bleed air to the vane stage or rotor stage of the turbine section (22), or both.

## Description

### BACKGROUND OF THE INVENTION

### 1. Technical Field

The present disclosure relates to aircraft in general, and to an aircraft turbine engine system with turbine cooling in particular.

### 2. Background Information

Turbine engines compress air, add fuel to the compressed air, and combust the air/fuel mixture. The combustion products are used to a power one or more turbine sections and in some instances is used to provide motive thrust. The aforesaid combustion products create a very high temperature environment that limits the types of materials that can be used in downstream components. To mitigate the high temperature environment, it is known to use cooling air to cool certain components exposed to the core flow path. The cooling lowers the component temperature and thereby makes it possible to construct the components from a material that has a lower maximum temperature threshold that would be required in the absence of cooling. Bleeding cooling air from the core flow path, however, very often negatively affects the efficiency of the engine since the work that can be performed by that air is dramatically reduced. Hence, there is always a need to improve turbine engine cooling to minimize the amount of bleed cooling air required.

### SUMMARY

According to an aspect of the present invention, an aircraft propulsion system is provided that includes a compressor section, a combustor section, a turbine section, a fuel source, a heat exchanger, a compressor bleed air passage, and a cooling air passage. The compressor section is configured to produce compressed air. The turbine section includes a vane stage and a rotor stage. The fuel source is configured to contain a non-hydrocarbon fuel. The heat exchanger has an air passage and a fuel passage. The air passage has an air inlet and outlet and is configured to permit a passage of the compressed air therethrough. The fuel passage is configured to permit a passage of the non-hydrocarbon fuel therethrough. The air and fuel passages are fluidically separate. The compressor bleed air passage is configured to receive compressed air bleed off a core flow path upstream of the combustor section. The compressor bleed air passage is in fluid communication with the air inlet of the heat exchanger air passage. The cooling air passage is configured to receive compressed air exiting the air outlet of the heat exchanger air passage and configured to direct the compressed bleed air exiting the air outlet of the heat exchanger air passage to the vane stage of the turbine section, or to the rotor stage of the turbine section, or both.

In an embodiment of the above, the vane stage may include a high pressure turbine (HPT) inlet guide vane stage and the rotor stage may include an HPT first rotor stage. The HPT inlet guide vane stage is disposed aft of the combustor section and the HPT first rotor stage is disposed aft of the HPT inlet guide vane stage. The cooling air passage may be configured to direct compressed bleed air exiting the air outlet of the heat exchanger air passage to the HPT inlet guide vane stage and to the HPT first rotor stage.

In an embodiment according to any of the previous embodiments, the cooling air passage may be configured to direct compressed bleed air to enter the HPT inlet guide vane stage and the HPT first rotor stage from an inner radial position.

In an embodiment according to any of the previous embodiments, the vane stage may further include an HPT second vane stage, wherein the HPT second vane stage is disposed aft of the HPT first rotor stage, and the cooling air passage may be configured to direct compressed bleed air exiting the air outlet of the heat exchanger air passage to the HPT second vane stage.

In an embodiment according to any of the previous embodiments, the cooling air passage may include a first cooling air passage segment and a second cooling air passage segment. The first cooling air passage segment may be configured to direct compressed bleed air to enter the HPT inlet guide vane stage and the HPT first rotor stage from an inner radial position, and the second cooling air passage segment may be configured to direct compressed bleed air to enter the HPT second vane stage from an outer radial position.

In an embodiment according to any of the previous embodiments, the system may further include a boost compressor configured to selectively increase the pressure of the compressed bleed air exiting the air outlet of the heat exchanger air passage, and the boost compressor may be in fluid communication with the first cooling air passage segment and the second cooling air passage segment.

In an embodiment according to any of the previous embodiments, the non-hydrocarbon fuel may include hydrogen.

In an embodiment according to any of the previous embodiments, the heat exchanger may be configured to permit the passage of the non-hydrocarbon fuel through the fuel passage in liquid form.

In an embodiment according to any of the previous embodiments, the compressor bleed air passage may be configured to receive compressed bleed air off the core flow path aft of the compressor and upstream of the combustor section.

According to an aspect of the present invention, a method of cooling an aircraft turbine engine is provided. The turbine engine includes a compressor section, a combustor section, a turbine section, and a fuel source. The method includes: providing a heat exchanger having an air passage that includes an air inlet and an air outlet, the air passage configured to permit a passage of air therethrough, and a fuel passage configured to permit a passage of a fuel therethrough, wherein the air passage and the fuel passage are fluidically separate; bleeding compressed air off of a core flow path upstream of the combustor section and directing the compressed bleed air through the heat exchanger air passage; directing the fuel through the heat exchanger fuel passage; and directing the compressed bleed air exiting the air outlet of the heat exchanger to a vane stage of the turbine section, or to a rotor stage of the turbine section, or both.

In an embodiment according to any of the previous embodiments, the fuel may include a non-hydrocarbon fuel.

In an embodiment according to any of the previous embodiments, the method may include directing compressed bleed air exiting the air outlet of the heat exchanger air passage to the HPT inlet guide vane stage and to the HPT first rotor stage.

In an embodiment according to any of the previous embodiments, the method may include directing compressed bleed air to the HPT inlet guide vane stage and to the HPT first rotor stage from an inner radial position.

In an embodiment according to any of the previous embodiments, the method may include directing compressed bleed air to the HPT second vane stage.

In an embodiment according to any of the previous embodiments, the method may include directing compressed bleed air to the HPT second vane stage from an outer radial position.

In an embodiment according to any of the previous embodiments, a boost compressor may be used to selectively increase the pressure of the compressed bleed air exiting the air outlet of the heat exchanger air passage.

In an embodiment according to any of the previous embodiments, the method may include bleeding compressed air from the core flow path aft of the compressor and upstream of the combustor section.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic representation of a gas turbine engine with which the present disclosure system may be utilized.
FIG. 2 is a diagrammatic representation of a present disclosure propulsion system embodiment.
FIG. 3 is a diagrammatic representation of a stator vane.
FIG. 4 is a diagrammatic representation of a rotor blade.
FIG. 5 is a diagrammatic representation of an airfoil that may be utilized within a stator vane and/or a rotor blade.
FIG. 6 is a diagrammatic representation of a portion of a present disclosure system embodiment.

### DETAILED DESCRIPTION

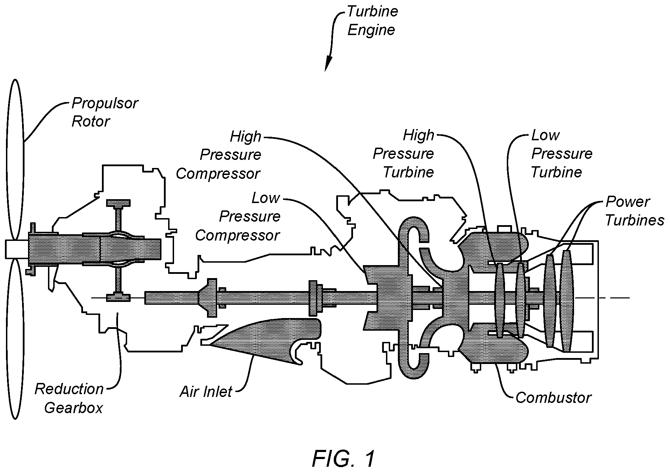

FIG. 1 diagrammatically illustrates a propulsion system for an aircraft. The aircraft may be an airplane, a helicopter, a drone (e.g., an unmanned aerial vehicle (UAV)) or any other manned or unmanned aerial vehicle or system. The propulsion system shown in FIG. 1 includes a propulsor rotor and a turbine engine. Non-limiting examples of a propulsor rotor include a propeller rotor for a turboprop propulsion system, a rotorcraft rotor (e.g., a main helicopter rotor) for a turboshaft propulsion system, a propfan rotor for a propfan propulsion system, a pusher fan rotor for a pusher fan propulsion system, a fan for a turbofan propulsion system, or the like. Unless otherwise stated herein, the present disclosure is not limited to any particular propulsor rotor configuration.

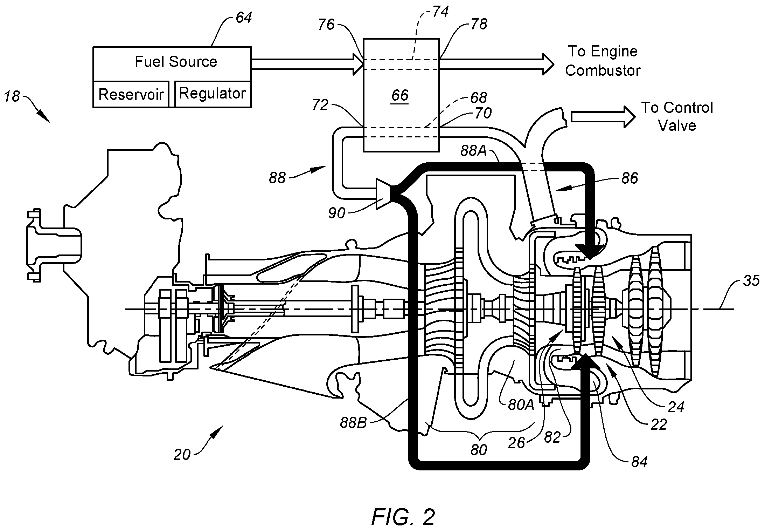

The turbine engine extends axially along an axis between an upstream, forward end and a downstream, aft end. The turbine engine includes a compressor section having a low pressure compressor (LPC) and a high pressure compressor (HPC), a combustor, and a turbine section having a high pressure turbine (HPT) and a low pressure turbine (LPT). In the exemplary engine embodiment shown in FIG. 2, the engine further includes a pair of power turbines. The engine includes a reduction gearbox that provides drive communication between an engine shaft and the propulsor rotor. The engine example shown in FIG. 1 is a non-limiting example of a gas turbine engine configuration that may be configured pursuant to aspects of the present disclosure. This example is not intended to be limiting; e.g., the present disclosure may be implemented with turbofan engines, turboshaft engines, and the like.

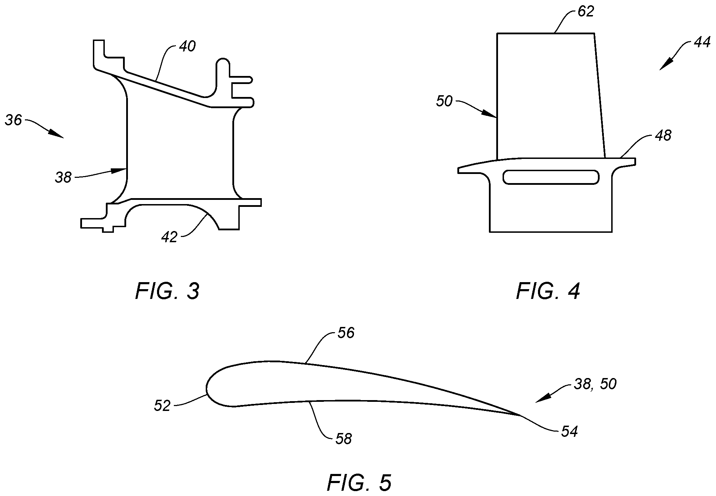

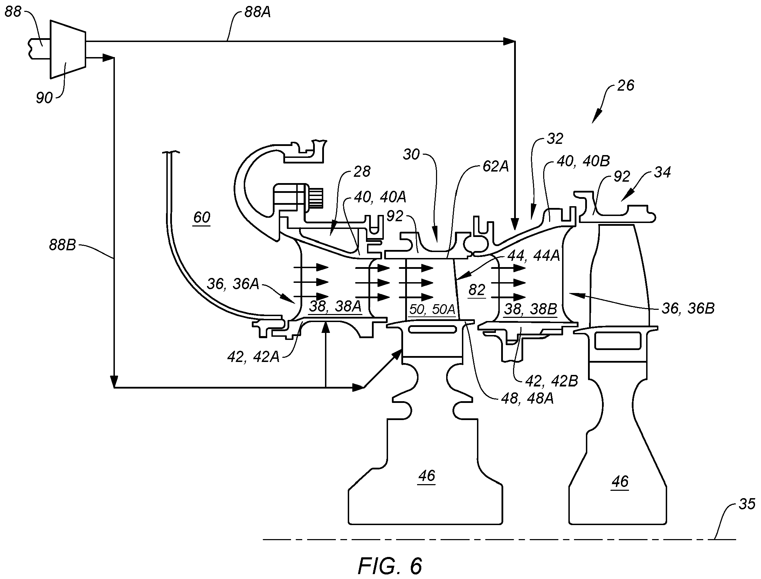

FIG. 2 diagrammatically shows a present disclosure propulsion system 18 embodiment with a turbine engine 20. The turbine engine 20 includes a turbine section 22 with a LPT 24 and an HPT 26, each represented as a single stage. These diagrammatic illustrations are for explanation purposes and are not intended to illustrate a detailed turbine engine. In an aircraft application, the LPT 24 and HPT 26 each typically have multiple stages. Using an HPT as an example, a typically HPT will have in axial order an inlet guide vane stage, followed by a first rotor stage, followed by a second vane stage, followed by a second rotor stage, and the like. FIG. 6 illustrates an HPT 26 having an HPT inlet guide vane stage 28, an HPT first rotor stage 30, an HPT second vane stage 32, and an HPT second rotor stage 34. Different engine configurations have different numbers of guide vane stages and rotor stages in the HPT, but it is common to have at least the aforesaid inlet guide vane stage, first rotor stage, second vane stage, and second rotor stage. A vane stage typically includes a plurality of stator vanes uniformly spaced from one another around the circumference of the stage. The stator vanes do not rotate around the engine rotational axis 35. Referring to FIG. 3, each stator vane 36 typically includes an airfoil 38 that extends between an outer radial platform 40 and an inner radial platform 42. The outer radial platforms 40 collectively define the outer radial flow path boundary through the vane stage and the inner radial platforms 42 collectively define the inner radial flow path boundary through the vane stage. Referring to FIG. 4, a rotor stage typically includes a plurality of rotor blades 44 extending out from a hub (FIG. 6 illustrates rotor stage hubs 46). The rotor blades 44 are uniformly spaced from one another around the circumference of the hub 46. Each rotor blade 44 has an airfoil 50 and typically has an inner radial platform 48. The rotor blades 44 and hub 46 rotate around the engine rotational axis 35. A rotationally stationary sealing structure (e.g., a turbine shroud - see FIG. 6) is disposed radially outside of the rotor blades 44 to establish a sealing gap between the tips of the rotor blades 44 and the sealing structure. The blade outer air seals collectively define the outer radial flow path boundary through the rotor stage and the blade inner radial platforms 48 collectively define the inner radial flow path boundary through the rotor stage. FIG. 5 shows a generic airfoil 38, 50 that may be included in a stator vane 36 or a rotor blade 44. The airfoil 38, 50 includes a leading edge 52, a trailing edge 54, a suction side surface 56, and a pressure side surface 58.

As indicated above, FIG. 6 diagrammatically illustrates a portion of an HPT 26 downstream of a combustor 60. The portion of the HPT 26 includes an HPT inlet guide vane stage 28, an HPT first rotor stage 30, an HPT second vane stage 32, and an HPT second rotor stage 34 in axial order. The vanes 36A in the HPT inlet guide vane stage 28 each include an airfoil 38A (e.g., as described above) that extends between an outer radial platform 40A and an inner radial platform 42A. The vanes 36B in the HPT second vane stage 32 also include an airfoil 38A that extends between an outer radial platform 40B and an inner radial platform 42B. The rotor blades 44A in the HPT first rotor stage 30 each include an inner platform 48A and an airfoil 50A (e.g., as described above). Each rotor blade airfoil 50A extends between the inner radial platform 48A and a blade tip 62A.

As indicated herein, embodiments of the present disclosure propulsion system 18 may be directed to a turbine engine 20 configured to combust non-hydrocarbon fuels such as hydrogen. Other embodiments of the present disclosure propulsion system 18 may be directed to a turbine engine 20 configured to combust hydrocarbon fuels; e.g., aviation fuel. In some present disclosure embodiments, the turbine engine 20 may be configured to combust a fuel that is 100% non-hydrocarbon; e.g., 100% H₂. In some embodiments, the turbine engine 20 may be configured to combust a fuel that is less than 100% non-hydrocarbon; e.g., a mixture of H₂ and a hydrocarbon fuel (e.g., aviation fuel). In some embodiments, the turbine engine 20 may be configured to combust a fuel that is 100% hydrocarbon based. The present disclosure is not limited to any combusting any particular fuel. In those embodiments wherein the present disclosure system combusts hydrogen, the present disclosure may include a fuel source 64 configured to store the hydrogen in liquid form.

Referring to FIG. 2, the present disclosure propulsion system 18 includes a fuel source 64 for providing a non-hydrocarbon fuel. The fuel source 64 includes a fuel reservoir and may include a fuel flow regulator. The fuel reservoir is configured to store a quantity of liquid non-hydrocarbon fuel (e.g., liquid H2). The fuel reservoir is configured to accommodate the type of non-hydrogen fuel being combusted in the turbine engine 20; e.g., the fuel reservoir may be configured as an insulated vessel to store liquid hydrogen. The fuel flow regulator is configured to regulate fuel flow from the fuel reservoir to the turbine engine 20.

As will be described herein, prior to combusting the non-hydrocarbon fuel to produce motive power, the present disclosure system 18 uses the non-hydrocarbon fuel as a coolant. Hence, the present disclosure includes at least one heat exchanger 66 configured to receive the non-hydrocarbon fuel and another fluid (e.g., air). The present disclosure is not limited to using the non-hydrogen fuel to cool a single fluid. Aspects of the present disclosure may use the non-hydrocarbon fuel for a variety of purposes; e.g., cooling more than one fluid, to condense water vapor, to power a turboexpander, and the like. Air cooled within the system 18 may, in turn, be used to cool engine components; e.g., compressor components, combustor components, turbine components, and the like. In those systems 18 wherein more than one fluid is cooled, the system 18 may include more than one heat exchanger; e.g., a heat exchanger for each different fluid being cooled. In addition to heat exchangers, the system for handling the non-hydrogen fuel prior to combustion may include other components for handling the non-hydrogen fuel; e.g., valving, metering devices, regulators, and the like. Examples of how the present disclosure may be configured and operated to utilize non-hydrogen fuel to cool turbine components are described herein. The present disclosure is not limited to any particular system for handling the non-hydrogen fuel prior to combustion other than one that includes turbine cooling as described herein, however, and may include additional components for different functionalities. In those embodiments wherein the fuel is 100% hydrocarbon based, the hydrocarbon fuel may in certain applications be used as a coolant in the manner described above regarding a non-hydrocarbon fuel.

As is diagrammatically shown in FIG. 2, the heat exchanger 66 includes an air passage 68 in fluid communication with air inlet 70 and an air outlet 72, and a fuel passage 74 in fluid communication with a fuel inlet 76 and a fuel outlet. The air and fuel passages 68, 74 through the heat exchanger 66 are fluidically separate from one another. A non-limiting example of a heat exchanger 66 configuration is a cross-flow tube and fin configuration. The present disclosure is not limited to any particular heat exchanger 66 configuration.

Referring to FIG. 2, air compressed within compressor section 80 is bled off of the core flow path 82 upstream of the combustor 84. The compressor bleed air directed to the heat exchanger 66 is directed through a compressor bleed air passage 86. In some embodiments, the compressor bleed air may be passed through a boost compressor to avoid pressure reversals. The present disclosure does not require a boost compressor. The bleed air is at a temperature and pressure higher than ambient, but is still at a temperature lower than that of the combustion products and excess air exiting the combustor 84 prior to entering the turbine section 22. In the example system shown in FIG. 2, the compressor bleed air is bled just aft of the HPC 80A and upstream of the combustor 84. In this example, a portion of the bleed air is provided to a control valve where it may be supplied to the aircraft for various uses. Another portion of the compressor bleed air is directed to the heat exchanger 66 having an air passage 68 for passing the compressor bleed air and a fuel passage 74 for passing non-hydrocarbon fuel. The non-hydrocarbon fuel may be in a liquid or gaseous form (e.g., super cooled gaseous H2), and the present disclosure is not limited to using either fuel form. The non-hydrocarbon fuel is at a temperature significantly below that of the compressor bleed air and the heat exchanger 66 may be configured (e.g., "sized") to produce a predetermined temperature drop within the compressor bleed air during certain portions of the flight plan; e.g., at predetermined ambient temperatures, altitudes, aircraft velocity, and the like. The non-hydrocarbon fuel provided to the heat exchanger 66 may come directly from the fuel source 64, or may have passed through one or more other heat exchangers (not shown) disposed upstream, and/or may have been used upstream for alternative functionalities, and so on. FIG. 2 diagrammatically illustrates the non-hydrocarbon fuel provided to the heat exchanger 66 directly from the fuel source 64, but the present disclosure is not limited to this particular system configuration. FIG. 2 diagrammatically illustrates the non-hydrocarbon fuel exiting the heat exchanger 66 being directed to the combustor 84, but here again the present disclosure is not limited thereto. In some system embodiments, the non-hydrocarbon fuel may be used to accomplish additional cooling functions, or to power components (e.g., a turboexpander), or the like before finally being directed to the combustor 84 for combustion.

The compressor bleed air exiting the heat exchanger 66 is directed to the turbine section 22 to be used, for example, as cooling air within turbine section components. The compressor bleed air (now cooled) passes from the heat exchanger 66 to the turbine section 22 via a cooling air passage 88. Bleed air introduced into the turbine section 22 must be at a pressure and temperature useful for such purpose; e.g., at a temperature that can accomplish useful component cooling and at a pressure sufficient to drive the bleed air to and through the respective turbine component to be cooled. In some applications, the present disclosure system 18 may include a boost compressor 90 to increase the pressure of the bleed air that has traversed the heat exchanger 66. As will be detailed herein, in some embodiments the compressor bleed air may be directed to different components within the turbine section 22. In such embodiments, the cooling air passage 88 may include a plurality of cooling air passage segments 88A, 88B, with each cooling air passage segment 88A, 88B directed to one or more different turbine section components.

The cooling requirements of the first few stages of the HPT (e.g., the inlet guide vane stage 28, the first rotor stage 30, the second vane stage 32, the second rotor stage 34, turbine shroud 92) in any given engine typically vary as a function of several different parameters. For example, the cooling requirements may vary as a function of the axial position of the component; e.g., gas within the core path flow 82 typically decreases in temperature as it travels axially aft. As another example, the cooling requirement of individual turbine components may vary as a function of their configuration. Examples of component cooling configurations include exterior film cooling, impingement cooling, internal cooling ducts, and the like, and combinations thereof. The present disclosure is not limited to use with any particular component cooling configuration.

The system example shown in FIG. 2 illustrates cooled compressor bleed air directed to an outer radial position of the first few HPT stages as well as to an inner radial position of the first few HPT rotor stages. The cooled compressor bleed air from the heat exchanger 66 may be directed to the inner and outer radial position of the first few HPT stages via dedicated conduits and / or channels disposed in the secondary air system of the engine 20. For example, and as diagrammatically shown in FIG. 2, the cooled compressor bleed air directed to the outer radial position of the first few HPT stages is directed through a first cooling air passage segment 88A and the cooled compressor bleed air directed to the inner radial position of the first few HPT stages is directed through a second cooling air passage segment 88B.

FIG. 6 diagrammatically illustrates the cooled compressor bleed air directed from the boost compressor 90 (optional) to the inner radial position as being specifically directed to the both the HPT inlet guide vane stage 28 and the HPT first rotor stage 30. Regarding the HPT inlet guide vane stage 28, the cooled compressor bleed air may be directed to a manifold / annular cavity that is open to all of the inlet guide vanes 36. The manifold and/or the inlet guide vanes 36 may be configured with one or more flow paths directing the cooling air to specific regions within each inlet guide vane 36. For example, each inlet guide vane 36 may be configured with a flow path that directs the cooling air to the leading edge of the respective inlet guide vane 38A, or a flow path that directs the cooling air to the trailing edge of the respective inlet guide vane 38A, or a flow path that directs the cooling air to known "hot spots" of the respective inlet guide vane 38A, or any combination thereof. The cooled compressor bleed air may be directed through the walls of the respective inlet guide vane 38A and into the core flow path 82, or may be directed to flow internally and to exit the inlet guide vane 38A at the trailing edge. FIG. 6 diagrammatically illustrates cooling air exiting the inlet guide vanes 38A via cooling apertures disposed at both the leading edge and the trailing edge.

Regarding the HPT first rotor stage 30, the cooled compressor bleed air may be directed to a cavity in fluid communication with cooling air inlets disposed in the rotor hub 46 and/or the respective rotor blades 44A. Cooled compressor bleed air passes from the cavity to the hub 46 and then to the rotor blades 44A, and/or directly into the rotor blades 44A. The hub 46 and rotor blades 44A may be configured with one or more flow paths directing the cooling air to specific regions within each rotor blade 44A. For example, each rotor blade 44A may be configured with a flow path that directs the cooling air to the leading edge of that rotor blade 44A , or to the trailing edge of that rotor blade 44A, and so on. The cooled compressor bleed air may be directed through the walls of the respective rotor blade 44A and into the core flow path 82. FIG. 6 diagrammatically illustrates cooling air exiting the first stage rotor blades 44A via cooling apertures disposed proximate to the leading edge. The present disclosure is not limited to any particular configuration for directing the cooling air into the first rotor stages rotor blades 44A, or any particular cooling passage configuration within the first stage rotor blades 44A.

FIG. 6 illustrates the cooled compressor bleed air directed to the outer radial position as being specifically directed to a manifold / annular cavity disposed radially outside of the HPT second vane stage 32. Each stator vane 36B in the second vane stage 32 may be configured with a flow path that directs the cooling air to the leading edge of the respective stator vane 36B, or a flow path that directs the cooling air to the trailing edge of the respective stator vane 36B, or a flow path that directs the cooling air to known "hot spots" of the respective stator vane 36B, or any combination thereof. The cooled compressor bleed air may be directed through the walls of the respective stator vane 36B and into the core flow path 82, or may be directed to flow internally and to exit the guide vane 36B at the trailing edge.

The aforesaid examples of where cooled compressor bleed air may be directed are provided to illustrate how the cooled compressor bleed air may be utilized. The present disclosure is not limited to these examples. For instance, cooled compressor bleed air directed to the outer radial position may be alternatively or in combination be directed to the turbine shroud 92 of the HPT first rotor stage 30 or elsewhere.

The present disclosure provides numerous advantages. A person of skill in the art will recognize that compressor bleed air is "expensive" in terms of engine efficiency. Consequently, it is very often desirable to minimize the amount of compressor air bled for cooling purposes. The utilization of significantly lower temperature non-hydrocarbon fuel as a cooling medium to cool the compressor bleed air is understood to either provide additional cooling in comparison to cooling that would be provided by the same amount of "untreated" compressor bleed air, or to provide the same amount of cooling that would be provided by "untreated" compressor bleed air now using less compressor bleed air.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc. The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An aircraft propulsion system (18), comprising:
a compressor section (80) configured to produce compressed air;
a combustor section (84);
a turbine section (22) having a vane stage and a rotor stage;
a fuel source (64) configured to contain a non-hydrocarbon fuel;
a heat exchanger (66) having an air passage (68) having an air inlet (70) and an air outlet (72), the air passage (68) configured to permit a passage of the compressed air therethrough, and a fuel passage (74) configured to permit a passage of the non-hydrocarbon fuel therethrough, wherein the air passage (68) and the fuel passage (74) are fluidically separate;
a compressor bleed air passage (86) configured to receive said compressed air bleed off a core flow path (82) upstream of the combustor section (84), the compressor bleed air passage (86) in fluid communication with the air inlet (70) of the heat exchanger air passage (68); and
a cooling air passage (88) configured to receive said compressed air exiting the air outlet (72) of the heat exchanger air passage (68) and configured to direct said compressed bleed air exiting the air outlet (72) of the heat exchanger air passage (68) to the vane stage of the turbine section (22), or to the rotor stage of the turbine section (22), or both.

2. The aircraft propulsion system (18) of claim 1, wherein:
the vane stage includes a high pressure turbine, HPT, inlet guide vane stage (28) and the rotor stage includes an HPT first rotor stage (30), wherein the HPT inlet guide vane stage (28) is disposed aft of the combustor section (84) and the HPT first rotor stage (30) is disposed aft of the HPT inlet guide vane stage (28); and
the cooling air passage (88) is configured to direct said compressed bleed air exiting the air outlet (72) of the heat exchanger air passage (68) to the HPT inlet guide vane stage (28) and to the HPT first rotor stage (30); and, optionally
the cooling air passage (88) is configured to direct said compressed bleed air to enter the HPT inlet guide vane stage (28) and the HPT first rotor stage (30) from an inner radial position.

3. The aircraft propulsion system (18) of claim 2, wherein:
the vane stage further includes an HPT second vane stage (32), wherein the HPT second vane stage (32) is disposed aft of the HPT first rotor stage (30); and
the cooling air passage (88) is configured to direct said compressed bleed air exiting the air outlet (72) of the heat exchanger air passage (68) to the HPT second vane stage (32).

4. The aircraft propulsion system (18) of claim 3, wherein:
the cooling air passage (88) includes a first cooling air passage segment (88A) and a second cooling air passage segment (88B);
the first cooling air passage segment (88A) is configured to direct said compressed bleed air to enter the HPT inlet guide vane stage (28) and the HPT first rotor stage (30) from an inner radial position; and
the second cooling air passage segment (88B) is configured to direct said compressed bleed air to enter the HPT second vane stage (32) from an outer radial position.

5. The aircraft propulsion system (18) of claim 4, wherein:
the system (18) further includes a boost compressor (90) configured to selectively increase the pressure of the compressed bleed air exiting the air outlet (72) of the heat exchanger air passage (68); and
the boost compressor (90) is in fluid communication with the first cooling air passage segment (88A) and the second cooling air passage segment (88B).

6. The aircraft propulsion system (18) of any preceding claim, wherein the non-hydrocarbon fuel includes hydrogen.

7. The system of any preceding claim, wherein the heat exchanger (66) is configured to permit the passage of the non-hydrocarbon fuel through the fuel passage (74) in liquid form.

8. The aircraft propulsion system (18) of any preceding claim, wherein the compressor bleed air passage (86) is configured to receive said compressed bleed air off the core flow path (82) aft of the compressor section (80) and upstream of the combustor section (84).

9. A method of cooling an aircraft turbine engine (20), the turbine engine (20) including a compressor section (80), a combustor section (84), a turbine section (22), and a fuel source (64), the method comprising:
providing a heat exchanger (66) having an air passage (68) that includes an air inlet (70) and an air outlet (72), the air passage (68) configured to permit a passage of air therethrough, and a fuel passage (74) configured to permit a passage of a fuel therethrough, wherein the air passage (68) and the fuel passage (74) are fluidically separate;
bleeding compressed air off of a core flow path (82) upstream of the combustor section (84) and directing the compressed bleed air through the heat exchanger air passage (68);
directing the fuel through the heat exchanger fuel passage (74); and
directing the compressed bleed air exiting the air outlet (72) of the heat exchanger (66) to a vane stage of the turbine section (22), or to a rotor stage of the turbine section (22), or both.

10. The method of claim 9, wherein the fuel includes a non-hydrocarbon fuel.

11. The method of claim 10, wherein:
the non-hydrocarbon fuel includes hydrogen; and/or
the non-hydrocarbon fuel is in liquid form.

12. The method of any of claims 9 to 11, wherein:
the vane stage includes a high pressure turbine, HPT, inlet guide vane stage (28) and the rotor stage includes an HPT first rotor stage (30), wherein the HPT inlet guide vane stage (28) is disposed aft of the combustor section (84) and the HPT first rotor stage (30) is disposed aft of the HPT inlet guide vane stage (28); and
the step of directing the compressed bleed air exiting the air outlet (72) of the heat exchanger air passage (68) includes directing the compressed bleed air to the HPT inlet guide vane stage (28) and to the HPT first rotor stage (30); and, optionally
the compressed bleed air is directed to the HPT inlet guide vane stage (28) and to the HPT first rotor stage (30) from an inner radial position.

13. The method of claim 12, wherein:
the vane stage further includes an HPT second vane stage (32), wherein the HPT second vane stage (32) is disposed aft of the HPT first rotor stage (30); and
the step of directing the compressed bleed air includes directing the compressed bleed air to the HPT second vane stage (32); and, optionally
the compressed bleed air is directed to the HPT second vane stage (32) from an outer radial position.

14. The method of any of claims 9 to 13, further comprising using a boost compressor (90) to selectively increase the pressure of the compressed bleed air exiting the air outlet (72) of the heat exchanger air passage (68).

15. The method of any of claims 9 to 14, wherein the step of bleeding compressed air off of the core flow path (82) includes bleeding said compressed air from the core flow path (82) aft of the compressor section (80) and upstream of the combustor section (84).
